## Europäisches Patentamt
## European Patent Office
## Office européen des brevets

(19)

(11) Veröffentlichungsnummer : **0 142 029**
**B1**

(12)

# EUROPÄISCHE PATENTSCHRIFT

(45) Veröffentlichungstag der Patentschrift :
28.03.90

(51) Int. Cl.⁵ : **H 01 M   2/20**

(21) Anmeldenummer : 84112169.2

(22) Anmeldetag : 11.10.84

(54) Speicherzellenverbindung.

(30) Priorität : 05.11.83 DE 3340079

(43) Veröffentlichungstag der Anmeldung :
22.05.85 Patentblatt 85/21

(45) Bekanntmachung des Hinweises auf die Patenterteilung : 28.03.90 Patentblatt 90/13

(84) Benannte Vertragsstaaten :
**BE FR GB IT NL**

(56) Entgegenhaltungen :
DE--C--   217 594
GB--A-- 2 083 278
US--A-- 1 201 215
US--A-- 1 215 004
US--A-- 4 332 868

(73) Patentinhaber : **Asea  Brown  Boveri  Aktiengesellschaft
Kallstadter Strasse 1
D-6800 Mannheim-Käfertal (DE)**

(72) Erfinder : **Hasenauer, Dieter, Ing.(grad.)
Freudenbergstrasse 13
D-6940 Weinheim (DE)**
Erfinder : **Jessen, Jens, Ing.(grad.)
Wasserturmstrasse 39
D-6904 Eppelheim (DE)**

(74) Vertreter : **Rupprecht, Klaus, Dipl.-Ing. et al
c/o Asea Brown Boveri Aktiengesellschaft Zentralbereich Patente Postfach 100351
D-6800 Mannheim 1 (DE)**

Jouve, 18, rue St-Denis, 75001 Paris, France

## Beschreibung

Die Erfindung bezieht sich auf eine Speicherzelle gemäß dem Oberbegriff des Patentanspruches 1.

Wiederaufladbaren elektrochemischen Speicherzellen mit Festelektrolyten eignen sich sehr gut zum Aufbau von Akkumulatoren mit hoher Energie und Leistungsdichte. Der bei Natrium/Schwefel-Speicherzellen verwendete Festelektrolyt aus Betaaluminiumoxid läßt nur Natriumionen passieren. Dies bedeutet im Gegensatz zum Bleiakkumulator, daß praktisch keine Selbstentladung stattfindet und beim Laden keine Nebenreaktionen ablaufen, wie etwa eine Wasserzersetzung beim Blei-Bleioxyd-System. Die Stromausbeute, d. h. der Faraday-Wirkungsgrad einer solchen Natrium/Schwefel-Speicherzelle liegt bei etwa 100 %.

Für die Herstellung von Akkumulatoren bzw. Hochtemperatur-Speicherbatterien werden eine Vielzahl solcher elektrochemischen Speicherzellen miteinander verschaltet. Die Hochtemperatur-Speicherbatterie für ein Elektrofahrzeug sollte beispielsweise einen Energieinhalt von 40 kWh aufweisen. Falls mit einer solchen Batterie insgesamt 200 Volt erzeugt werden sollen, müssen für den Aufbau der Speicherbatterie etwa 500 Speicherzellen miteinander verschaltet werden, wenn davon ausgegangen wird, daß jede Speicherzelle eine Spannung von etwa 2 Volt liefert.

Für die Verschaltung, insbesondere die elektrische Verbindung der Speicherzellen zu einer solchen Batterie werden Stromschienen oder Zellverbinder verwendet, die aus Einsteinium und Kupfer gefertigt sind. Diese Stromschienen und Zellverbinder sind durch plasmagespritzte Aluminium- bzw. Aluminiumoxid-Schichten korrosionsgeschützt. Die Verbindung der Speicherzellen mit den Stromschienen bzw. Zellverbindern sowie die Verbindung der Stromschienen und Zellverbinder untereinander erfolgt durch Schrauben. Es hat sich gezeigt, daß durch die ungenügende Wärmefestigkeit des Kupfers Lockerungen der Schraubverbindungen auftreten, die auch nicht durch die Zuhilfenahme von Tellerfedern verhindert werden können. Ferner wird durch die Oxidbildung auf dem Aluminiumüberzug ein erhöhter Übergangswiderstand bewirkt.

Aus der US-A-1 201 215 ist eine Batterieverbindung bekannt. Hierfür ist ein Verbindungselement vorgesehen, das durch einen flexiblen Metallstreifen gebildet wird. Das erste Ende dieses Verbindungselements kann mit dem anodischen Stromabnehmer einer ersten Speicherzelle und mit seinem gabelförmigen Ende mit dem kathodischen Stromabnehmer einer zweiten Speicherzelle verbunden werden.

Aus der DE-OS 30 33 117 sind Speicherbatterien bekannt geworden, bei denen für die Verschaltung der Speicherzellen Zellverbinder bzw. Stromschienen aus aluminiumplattiertem Stahl- bzw. Edelstahlverbindungen verwendet werden. Auch hierbei treten Oxidbildungen auf, die ein starkes Anwachsen des Übergangswiderstandes zur Folge haben.

Die Verwendung von Stromschienen und Zellverbinder aus Aluminiumlegierungen, wie beispielsweise Aluminium-, Kupfer-, Manganlegierungen bzw. Aluminiummagnesiumlegierungen sind auf Grund ihrer geringen Wärmefestigkeit hierfür ebenfalls ungeeignet.

Der Erfindung liegt die Aufgabe zugrunde, eine lösbare Speicherzellenverbindung zu schaffen, wobei die hierfür verwendeten Anschlußelemente einen sehr kleinen ohmschen Widerstand aufweisen und den an sie gestellten betrieblichen Bedingungen dauerhaft standhalten können.

Diese Aufgabe wird erfindungsgemäß durch die gekennzeichneten Merkmale des Patentanspruches 1 gelöst.

Weitere erfindungswesentliche Merkmale sind in den Unteransprüchen gekennzeichnet.

Die Erfindung wird nachfolgend anhand von Zeichnungen näher erläutert.

Es zeigen :

Figur 1 : Eine für die lösbare Verbindung ausgebildete Speicherzelle mit anodischen und kathodischen Anschlußelementen,

Figur 2 : zwei elektrisch miteinander verschaltete Speicherzellen,

Figur 3 : eine Draufsicht auf die beiden in Figur 2 dargestellten Speicherzellen,

Figur 4 : mehrere elektrisch miteinander verbundene Speicherzellen in Draufsicht,

Figur 5 : eine Variante der in Figur 1 gezeigten elektrochemischen Speicherzelle,

Figur 6 : eine Stromschiene in Verbindung mit einem Anschlußelement einer Speicherzelle,

Figur 7 : eine Variante der in Figur 6 gezeigten Stromschiene,

Figur 8 : eine weitere Variante der erfindungsgemäßen Speicherzelle,

Figur 9 : eine Variante der in Figur 2 dargestellten Verbindung von zwei Speicherzellen.

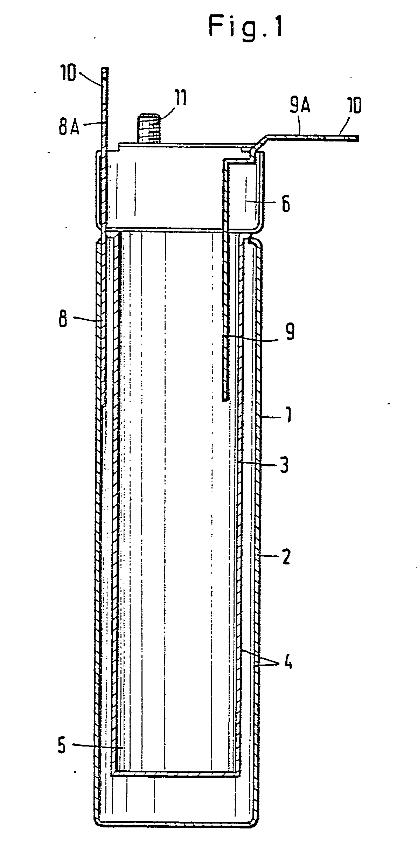

Die in Figur 1 dargestellte elektrochemische Speicherzelle 1 wird durch ein metallisches Gehäuse 2 und einen Festelektrolyten 3 gebildet. Das metallische Gehäuse 2 ist bei der hier dargestellten Ausführungsform becherförmig ausgebildet. Vorzugsweise ist es aus Aluminium gefertigt. Der Festelektrolyt 3 ist im Inneren des becherförmigen metallischen Gehäuses 2 angeordnet und ebenfalls becherförmig ausgebildet. Die Abmessungen des Festelektrolyten 3 sind so gewählt, daß zwischen den inneren Begrenzungsflächen des Gehäuses 2 und den äußeren Begrenzungsflächen des Festelektrolyten 3 rundum ein Zwischenraum 4 verbleibt. Dieser wird als Kathodenraum 4 genutzt. Das Innere des Festelektrolyten 3 dient als Anodenraum 5. Der Kathodenraum 4 isт mit einem mit Schwefel getränkten Graphitfilz ausgefüllt (hier nicht dargestellt). In dem Anodenraum 5 ist das Alkalimetall, insbesondere das Natrium enthalten. Über dem Anodenraum 5 ist ein Vorratsbehälter 6 für Natrium vorgesehen, der über eine oder mehrere Öffnungen (hier nicht dargestellt) mit dem Anodenraum 5 in Verbindung steht. Die Abmessungen des Vorratsbehälters 6 sind so gewählt, daß er die Öffnung des Anodenraums 5 vollständig verschließt. In den Kathodenraum 4 ragt ein kathodischer Stromkollektor 8, der als Stab ausgebildet ist. Der Stromkollektor ist bis in die Verschlußkappe 7 der Speicherzelle geführt, und dort mit einem nach außen weisenden Anschlußelement 8A elektrisch leitend verbunden. In den Anodenraum 5 ragt ebenfalls ein Stromkollektor 9. Diese ist ebenfalls stabförmig ausgebildet und elektrisch leitend mit einem nach außen gerichteten Anschlußelement 9A verbunden. Die beiden Anschlußelemente sind an der oberen Stirnseite der Speicherzelle 11 nach außen geführt. Sie sind so angeordnet, daß sie im Randbereich des Gehäuses 2 positioniert sind, und zwar so, daß sie auf einer Geraden liegen, die durch den Mittelpunkt der Stirnfläche verlauft. Bei dem hier dargestellten Ausführungsbeispiel sind die beiden Anschlußelemente aus hochwarmfestem Kupfer-Zirkonium oder Kupfer-Chrom bzw. Kupfer-Chrom-Zirkonium gefertigt. Eine ebenso gute elektrische Verbindung zwischen dieser Speicherzelle 1 und weiteren Nachbarspeicherzellen (hier nicht dargestellt) wird erreicht, wenn die anodischen und kathodischen Anschlußelemente 8A und 9A aus einem dispersionsgehärteten Kupfer bzw. einem dispersionsgehärteten Aluminium gefertigt sind. Die aus einer Kupferlegierung bzw. aus einem dispersionsgehärtetem Kupfer gefertigten anodischen und kathodischen Anschlußelemente 8A und 9A weisen eine korrosionsbeständige Beschichtung auf, die aus Gold, Silber, Rhodium, Chrom oder Nickel bestehen kann. Werden die beiden Anschlußelemente 8A und 9A aus einem dispersionsgehärtetem Aluminium gefertigt, so werden die für den Stromübergang nachteiligen Oxidschichten beseitigt, und die Oberflächen der Anschlußelemente 8A und 9A zusätzlich mit einer elektrisch gut leitenden Beschichtung versehen, die beispielsweise aus Gold, Silber, Rhodium, Nickel oder Chrom bestehen kann. Erfindungsgemäß können die auf den Anschlußelementen 8A und 9A angeordneten Beschichtungen auf der gesamten Oberfläche oder nur parziell aufgetragen werden. Bei einer parziellen Auftragung der korrosionsbeständigen Beschichtung, wird diese insbesondere dort angeordnet, wo ein Kontakt der Anschlußelemente 8A und 9A mit einem weiteren Anschlußelement vorgesehen ist. Dies ist insbesondere im Bereich der freien Enden dieser Anschlußelemente 8A und 9A der Fall. Hier ist jeweils eine Durchbrechung 10 vorgesehen, mit der das jeweilige Anschlußelement 8A, 9A unter Verwendung einer Halteschraube mit einem weiteren Anschlußelement (hier nicht dargestellt) verbunden werden. Bei dem hier dargestellten Ausführungsbeispiel sind die Anschlußelemente 8A und 9A laschenförmig ausgebildet, wodurch der flächige Kontakt beim Verbinden derselben mit weiteren Anschlußelementen 8A, 9A verbessert wird. Auf der Stirnfläche der Speicherzelle 1 ist ein nach außen gerichtetes Befestigungselement 11 dauerhaft gehaltert. Vorzugsweise ist dieses Befestigungselement 11 aus einem Metall, insbesondere Aluminium gefertigt, stabförmig ausgebildet und mit dem ebenfalls aus Metall hergestellten Gehäuse 2 fest verbunden. Der Querschnitt des Betätigungselements 11 ist an den Querschnitt der Durchbrechungen 10 angepaßt, die jeweils an den freien Enden der Anschlußelemente 8A und 9A vorgesehen sind. Bei dem hier dargestellten Ausführungsbeispiel ist das Befestigungselement 11 so angeordnet, daß es auf der senkrechten Verbindungsgeraden zwischen den beiden Anschlußelementen 8A und 9A positioniert ist. Dieses Befestigungselement 11 ist für die elektrisch leitende Verbindung zweier Speicherzellen vorgesehen. Das Befestigungselement 11 ist, wie anhand von Figur 1 zu sehen ist, in geringem Abstand von dem kathodischen Anschlußelement 8A positioniert.

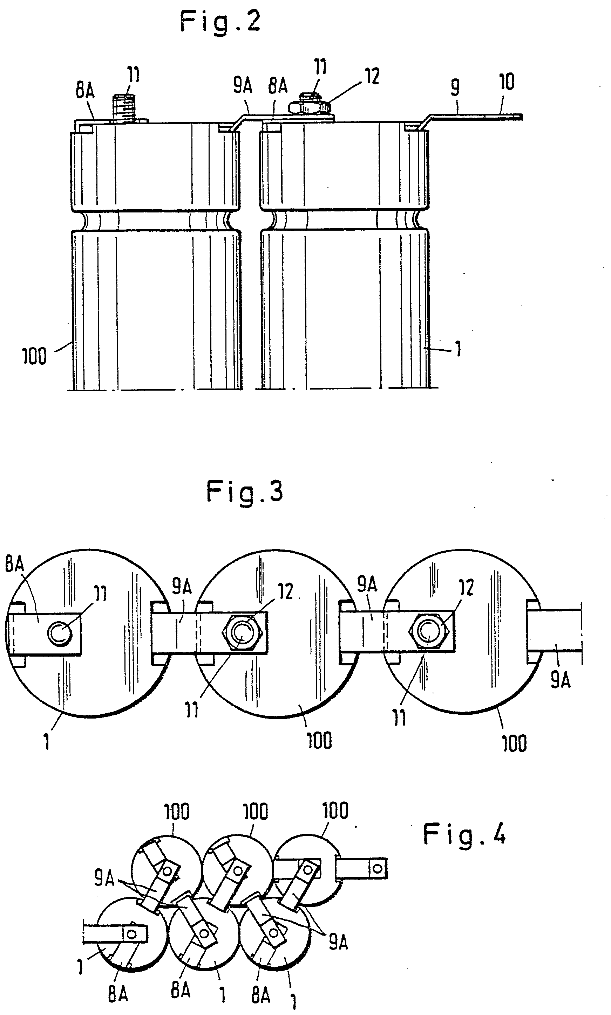

In Figur 2 ist die erfindungsgemäße elektrische leitende Verbindung zwischen zwei Speicherzellen 1 dargestellt. Die beiden Speicherzellen 1 und 100 sind in entsprechender Weise wie die in Figur 1 dargestellte Speicherzelle 1 ausgebildet. Für ihre elektrisch leitende Verbindung werden die beiden Speicherzellen 1 und 100 so hintereinander angeordnet, daß das anodische Anschlußelement 9A einen Minimalabstand zu dem Befestigungselement 11 der Speicherzelle (1) aufweist.

Wie bereits oben erwähnt sind die anodischen und kathodischen Anschlußelemente 8A und 9A laschenförmig ausgebildet und an ihren freien Enden mit einer Durchbrechung 10 versehen. Für die elektrische Verschaltung werden die kathodischen Anschlußelemente 8A so über die Stirnfläche der jeweiligen Speicherzelle 1, 100 gebogen, daß sie parallel zur Stirnfläche derselben verlaufen und in engem Kontakt mit dieser stehen. Die Durchbrechungen 10 der kathodischen Anschlußelemente 8A sind so positioniert, daß die Befestigungselemente 11 durch diese Durchbrechungen 10 hindurchgesteckt werden können, und nun von den kathodischen Anschlußelementen 8A umgeben sind. Die anodischen Anschlußelemente 9A werden nach außen umgebogen, so daß sie ebenfalls parallel zur Stirnfläche der Speicherzelle 1, 100 verläuft. Die beiden miteinander zu verbindenden Speicherzellen 1 und 100 werden so positioniert, daß das Befestigungselement 11 der Speicherzelle 1 durch die Durchbrechung 10 des anodischen Anschlußelementes 9A der ersten Speicherzelle 100 hindurchgesteckt werden kann, so daß das anodische Anschlußelement 9A der Speicherzelle 100 auf dem kathodischen Anschlußelement 8A der Speicherzelle 1 aufliegt. Mit Hilfe einer Haltemutter 12, die auf das mit einem Außengewinde versehenen Befestigungselement 11 aufgeschraubt wird, werden die beiden über das Befestigungselement 11 geschobenen Anschlußelemente 8A und 9A elektrisch leitend verbunden. Die Haltemutter 12 wird zur Erzielung eines sehr guten elektrischen Kontakts soweit wie möglich gegen die Stirnfläche der Speicherzelle 1, 100 gedreht.

In Figur 3 sind elektrochemische Speicherzellen 1 und 100, eine Reihe bildend, hintereinander angeordnet und wie oben beschrieben elektrisch leitend miteinander verbunden. Wie Figur 3 in einer Draufsicht zeigt, kann durch die entsprechende Längenwahl der anodischen Anschlußelemente 9A die Größe des Abstandes zwischen den in Reihe geschalteten Speicherzellen 1 und 100 in gewünschter Weise festgelegt werden.

Sollen die Speicherzellen einen Minimalabstand aufweisen, was insbesondere bei dem Aufbau einer Batterie erforderlich ist, damit die Abmessungen der Batterie möglichst klein gehalten werden können, und dennoch eine optimale Anzahl von Speicherzellen im Innenraum der Batterie angeordnet werden kann, werden die Speicherzellen vorzugsweise in einer so dichten Anordnung positioniert, wie sie in Figur 4 dargestellt ist. Figur 4 zeigt die Draufsicht auf sechs angeordnete Speicherzellen 1 und 100. Hier sind drei Speicherzellen 1 hintereinander, eine Reihe bildend, angeordnet. Drei weitere Speicherzellen 100 sind in gleicher Weise angeordnet. Die Speicherzellen 100 sind zusätzlich so positioniert, daß die durch sie gebildete Reihe parallel zur Reihe der Speicherzellen 1 verläuft, und auf Lücke gesetzt ist, so daß jede Speicherzelle 100 wenigstens bereichsweise in einem zwischen zwei Speicherzellen 1 gebildeten Zwischenraum angeordnet ist. Wie anhand von Figur 4 zu sehen ist, sind die Speicherzellen 1 und 100 so ausgebildet, daß die an ihren Stirnflächen gehaltenen Befestigungselemente 11 jeweils mittig auf den Stirnflächen positioniert sind. Die beiden Anschlußelemente 8A und 9A einer jeden Speicherzelle 1, 100 sind auch hierbei so angeordnet, daß sie auf einer gemeinsamen durch den Mittelpunkt der Stirnfläche gehenden Gerade liegen. Alle kathodischen Anschlußelemente 8A sind wiederum parallel zur Oberfläche der Speicherzelle 1, 100 gebogen, so daß ihre Durchbrechungen 10 von dem Befestigungselement 11 der zugehörigen Speicherzelle durchsetzt werden. Die anodischen Anschlußelemente 9A sind wiederum nach außen gebogen und mit den kathodischen Anschlußelementen 8A der dazu in Reihe geschalteten Speicherzelle 1, 100 verbunden. Wie anhand von Figur 4 zu sehen ist, sind die hier angeordneten Speicherzellen 1 so verschaltet, daß die erste Speicherzelle 1 der drei hintereinander angeordneten Speicherzellen 1 mit der ersten Speicherzelle 100 der drei hintereinander angeordneten Speicherzellen 100 elektrisch leitend verbunden ist. Diese erste Speicherzelle 100 der zweiten Reihe ist mit der zweiten Speicherzelle 1 der ersten Reihe elektrisch verschaltet, während diese mit der zweiten Speicherzelle 100 der zweiten Reihe und selbige wieder mit der dritten Speicherzelle 1 der ersten Reihe verschaltet ist. Die dritte Speicherzelle 1 wiederum ist elektrisch an die dritte Speicherzelle 100 angeschlossen. Die Speicherzellen, welche für den Aufbau der Batterie in einer solchen Anordnung positioniert sind, müssen jedoch nicht in dieser Weise miteinander verschaltet werden. Es besteht auch hierbei die Möglichkeit, alle Speicherzellen 1 in Reihe zu schalten und eine weitere Reihenschaltung mit den Speicherzellen 100 zu bilden.

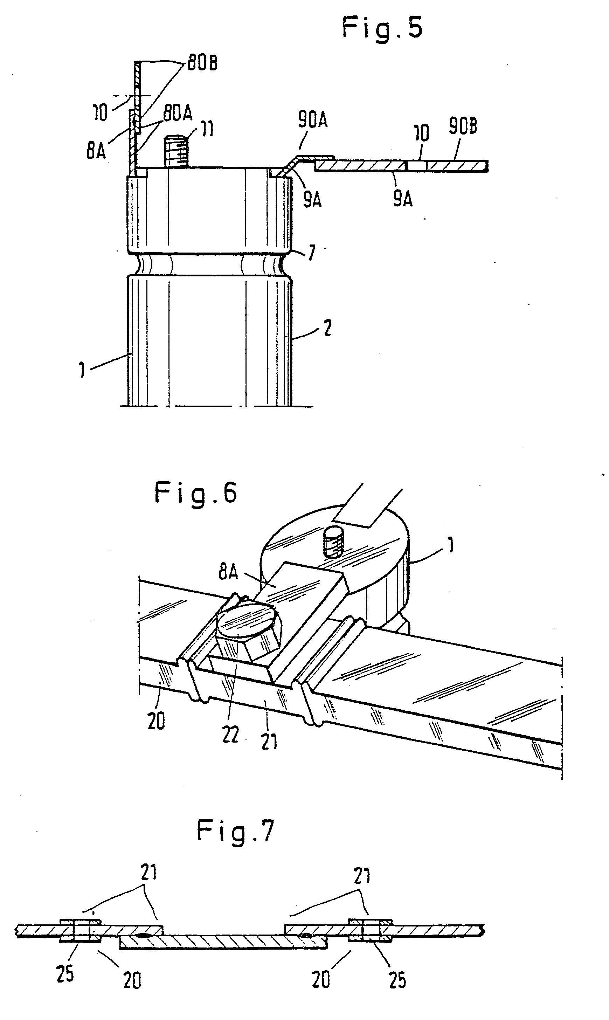

In Figur 5 ist eine Variante der erfindungsgemäßen Speicherzelle dargestellt. Diese Speicherzelle ist im wesentlichen so aufgebaut, wie die in Figur 1 dargestellte und in der dazugehörigen Beschreibung erläuterte Speicherzelle 1. Unterschiede bestehen lediglich in der Ausbildung des kathodischen und anodischen Anschlußelementes 8A und 9A. Bei dem hier dargestellten Ausführungsbeispiel sind die beiden Anschlußelemente 8A und 9A wieder im oberen seitlichen Bereich der Verschlußkappe 7 befestigt, und zwar derart, daß sie auf einer Geraden liegen, die durch den Mittelpunkt der Deckfläche der Verschlußkappe 7 geführt ist. Das kathodische Anschlußelement 8A ist bei dem hier gezeigten Ausführungsbeispiel zweiteilig ausgebildet. Insbesondere besteht der erste Teilabschnitt 80A, dessen eines Ende fest mit der Speicherzelle 1 verbunden ist, aus reinem Aluminium, während der sich daran anschließende zweite Teilabschnitt 80B, der in seinem Endbereich mit der Durchbrechung 10 versehen ist, aus dispersionsgehärtetem Aluminium gefertigt ist. Das kathodische Anschlußelement 8A ist auch bei diesem Ausführungsbeispiel laschenförmig ausgebildet und wird für die elektrische Verbindung mit einer weiteren Speicherzelle (hier nicht dargestellt) nach innen umgebogen, so daß das Befestigungselement 11 der Speicherzelle durch die Durchbrechung 10 hindurchtritt.

Das anodische Anschlußelement 9A ist ebenfalls als Lasche ausgebildet und weist zwei Teilabschnitte 90A und 90B auf. Der mit der Speicherzelle 1 verbundene Teilabschnitt 90A ist auch hierbei aus reinem Aluminium gefertigt, während der zweite die Durchbrechung 10 aufweisende Teilabschnitt 90B aus einem dispersionsgehärtetem Aluminium hergestellt ist. Der zweite Teilabschnitt 90B ist an den ersten Teilabschnitt 90A angeschweißt. Die beiden aus dispersionsgehärtetem Aluminium hergestellten Teilabschnitte 80B und 90B der beiden Anschlußelemente 8A und 9A sind wenigstens bereichsweise mit einer Schicht aus Gold, Silber, Rhodium, Nickel oder Chrom überzogen, wodurch eine Korrosion des Aluminiums verhindert wird. Bei einer parziellen Anordnung der Schicht wird vorzugsweise nur der Bereich um die Durchbrechung 10 beschichtet. Die Beschichtung wird beispielsweise mit einem galvanischen Beschichtungsverfahren aufgebracht. Das Befestigungselement 11 der Speicherzelle ist so auf der Oberfläche der Deckkappe 7 angeordnet, daß es auf der Verbindungsgeraden zwischen den beiden Anschlußelementen 8A und 9A liegt, und zwar derart, daß es zwischen dem kathodischen Anschlußelement 8A und der Längsachse der Speicherzelle positioniert ist.

Die in den Figuren 2, 3 und 4 dargestellten Ausführungsbeispiele zeigen ausschließlich die Serienschaltung von Speicherzellen. Für diese Verschaltung ist die in den Figuren 2, 3 und 4 beschriebene Anordnung der Anschlußelemente geeignet. Für den Aufbau einer Speicherbatterie müssen jedoch auch eine gewisse Anzahl von Speicherzellen parallel geschaltet werden. Vorzugsweise werden hierfür Stromschienen verwendet. In Figur 6 ist eine solche Stromschiene im Detail dargestellt. Die Stromschiene 20 ist im wesentlichen aus Aluminium gefertigt und laschenförmig ausgebildet. Lediglich die Bereiche 21, mit denen das Anschlußelement 8A, 9A einer Speicherzelle verbindbar ist, sind aus dispersionsgehärtetem Aluminium gefertigt. Die Bereiche 21 der Stromschiene 20, die für die Verbindung mit den Anschlußelementen 8A bzw. 9A der Speicherzellen 11 vorgesehen sind, werden durch ebenfalls laschenförmige Teilstücke gebildet, die aus dispersionsgehärtetem Aluminium oder Stahl gefertigt und mittels Widerstandsschweißens mit den aus Aluminium gefertigten Teileelementen der Stromschiene 20 dauerhaft verbunden. Die Teilstücke 21 der Stromschiene 20 sind mit wenigstens einer Bohrung versehen, die ein Innengewinde aufweist (hier nicht dargestellt). Das mit der Stromschiene zu verbindende Anschlußelement 8A, 9A wird mit seiner Durchbrechung 10 (hier nicht dargestellt) über die Öffnung der Bohrung im Teilstück 21 angeordnet. Mit Hilfe einer Haltemutter 22, die in die Bohrung (hier nicht dargestellt) gedreht wird, kann das Anschlußelement 8A, 9A mit der Stromschiene 20 verbunden werden.

Für die Parallelschaltung von elektrochemischen Speicherzellen werden alle Anschlußelemente 8A der miteinander parallel zu schaltenden Speicherzellen an eine erste Stromschiene 20, insbesondere an deren Teilstücken 21 festgeschraubt. Für die elektrische Verbindung der zweiten Anschlußelemente 9A wird eine weitere Stromschiene (hier nicht dargestellt) verwendet, die in gleicher Weise ausgebildet ist. Durch entsprechende Verbindung der zweiten anodischen Anschlußelemente 9A mit der zweiten Stromschiene wird eine Parallelschaltung der Speicherzellen erreicht.

In Figur 7 ist eine weitere Stromschiene 20 dargestellt, die laschenförmig ausgebildet ist, und im wesentlichen aus Aluminium oder Stahl gefertigt ist. Lediglich die Bereiche, die mit den Anschlußelementen 8A, 9A der Speicherzellen verbindbar sind, werden durch Teilstücke 21 gebildet, welche aus einem dispersionsgehärtetem Aluminium gefertigt sind. Die Teilstücke 21 sind mit einer Durchbrechung 25 oder einer Bohrung versehen, in welche eine Haltemutter gedreht werden kann, mit der sich das Anschlußelement einer Speicherzelle an dem Teilstück 21 der Stromschiene 20 befestigen läßt. Die Teilstücke 21 der hier dargestellten Stromschiene sind mittels Reibschweißen mit den aus Aluminium oder Stahl gefertigten Bereichen der Stromschiene 20 verbunden. Vorzugsweise werden bei einer Verbindung der Teilstücke 21 mit den übrigen Bereichen der Stromschiene 20 die Teilstücke 21 auf der Ober- oder Unterseite der aus Aluminium oder Stahl hergestellten Teile der Stromschiene 20 befestigt.

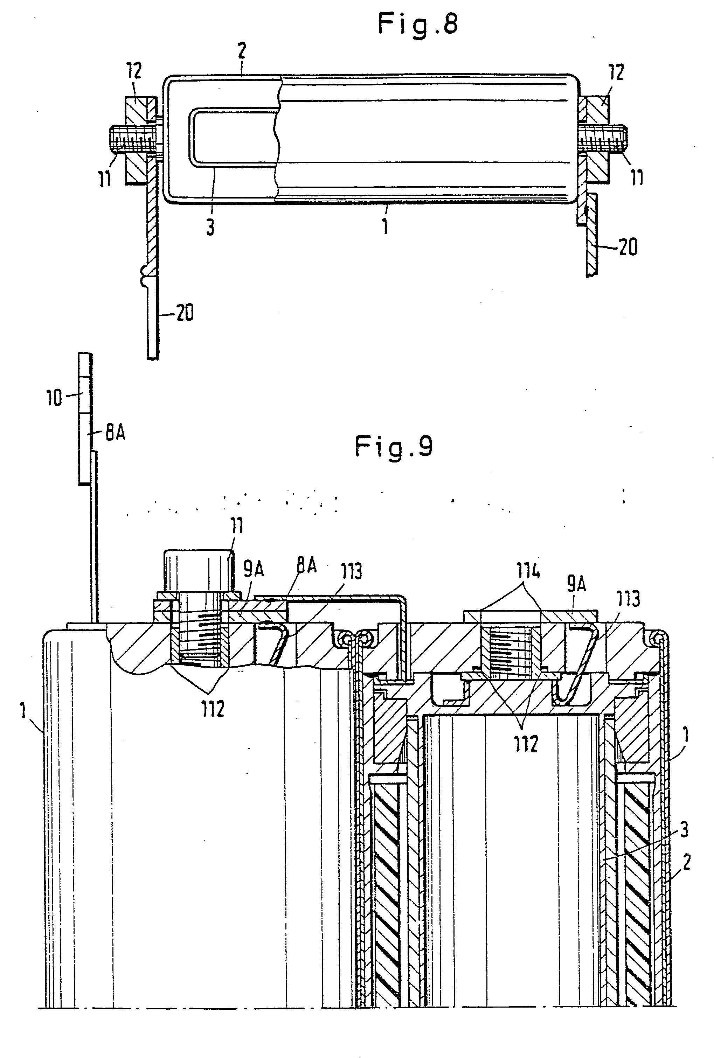

Figur 8 zeigt eine Speicherzelle 1, welche für die liegende Anordnung von Speicherzellen in einer Batterie vorgesehen ist. Die Speicherzelle 1 wird durch ein metallisches Gehäuse 2 begrenzt, das becherförmig ausgebildet ist. Ein ebenfalls becherförmiger Festelektrolyt 3 ist im Inneren der Speicherzelle 1 angeordnet. Innerhalb des Festelektrolyten 3 ist das Alkalimetall angeordnet. Die Abmessungen des Festelektrolyten 3 sind auch hierbei so gewählt, daß zwischen seinen Außenflächen und den Innenflächen des Gehäuses 2 ein zusammenhängender Zwischenraum gebildet wird, der mit einem mit Schwefel getränkten Graphitfilz (hier nicht dargestellt) ausgefüllt ist. Die Speicherzelle 1 weist an ihrem ersten Ende ein stabförmiges Befestigungselement 11 auf, das mit der Speicherzelle 1 fest verbunden ist. Am zweiten Ende der Speicherzelle ist ein weiteres stabförmiges Befestigungselement 11 angeordnet. Ein erstes Befestigungselement 11 der Speicherzelle ist mit dem kathodischen Stromabnehmer (hier nicht dargestellt) verbunden. Das zweite Befestigungselement 11 ist elektrisch leitend mit dem anodischen Stromabnehmer (hier nicht dargestellt) verbunden. Die beiden Befestigungselemente 11 können über Stromschienen 20, welche in den Figuren 6 und 7 beschrieben sind, mit weiteren Speicherzellen (hier nicht dargestellt) in Reihe bzw. parallel geschaltet werden. Das mit dem kathodischen Stromkollektor verbundene Befestigungselement 11 ist bei dem hier dargestellten Ausführungsbeispiel mit einer in Figur 6 dargestellten und in der dazugehörigen Beschreibung erläuterten Stromschiene mittels einer Haltemutter 12 elektrisch verbunden. Das zweite Befestigungselement 11, das mit dem anodischen Stromabnehmer der Speicherzelle elektrisch leitend verbunden ist, ist an einer in Figur 7 dargestellten und in der dazugehörigen Beschreibung näher erläuterten Stromschiene 20 befestigt, wobei die elektrisch leitende Verbindung zwischen der Stromschiene 20 und dem zweiten Befestigungselement 11 ebenfalls unter Zuhilfenahme einer Haltemutter 12 erfolgt, die auf das Befestigungselement 11 aufgeschraubt und gegen die seitliche Begrezungsfläche der Speicherzelle 1 gedreht ist.

Figur 9 zeigt eine Variante bezüglich der Ausführungsform des Befestigungselementes 11. In Figur 9 sind zwei Speicherzellen 1 nebeneinander angeordnet. Beide Speicherzellen sind im wesentlichen so ausgebildet, wie die in den Figuren 1 und 2 dargestellten Speicherzellen. Unterschiede bestehen lediglich in der Ausbildung des Befestigungselementes 11. Wie anhand von Figur 9 zu sehen ist, wird das Befestigungselement bei diesen beiden Speicherzellen durch eine Schraube 11 gebildet, welche in eine Bohrung 112 in der Stirnfläche der Speicherzelle 1 geschraubt werden kann. Die Bohrung 112 ist bei beiden Speicherzellen 1 so angeordnet, daß sie in der Längsachse der Speicherzellen 1 verläuft. Jede Speicherzelle ist mit einem kathodischen Anschlußelement 8A und einem anodischen Anschlußelement 9A versehen. Die kathodischen Anschlußelemente 8A sind laschenförmig ausgebildet und im Randbereich der Stirnfläche so angeordnet, daß sie nach außen umgebogen und mit der benachbarten Speicherzelle verbunden werden können. Insbesondere weisen die kathodischen Anschlußelemente 8A im Bereich ihres freien Endes eine Durchbrechung 10 auf, deren Durchmesser dem Durchmesser der Bohrung 112 in der Stirnfläche der Speicherzelle 1 angepaßt ist. Die kathodischen Anschlußelemente 8A werden so nach außen umgebogen, daß die Durchbrechungen 10 über der Öffnung 114 der Bohrung 112 der benachbarten Speicherzelle angeordnet werden. Um die Öffnung 114 jeder Bohrung 112 ist eine als anodisches Anschlußelement 9A dienende Ringscheibe angeordnet, die auf der Stirnfläche der Speicherzelle aufliegt und mit dieser fest verbunden ist. Ein elektrischer Leiter 113, der mit der Begrenzungswandung der Bohrung 112 fest verbunden und mit der elektrisch leitenden Verschlußplatte des innerhalb des Festelektrolyten 3 angeordneten Anodenraums 5 in Verbindung steht, ist ebenfalls elektrisch leitend mit der Unterfläche des anodischen Anschlußelementes 9A verbunden. Das kathodische Anschlußelement der zu dieser Speicherzelle in Reihe zu schaltenden Speicherzelle wird so angeordnet, daß nicht nur die Durchbrechung 10 über der Öffnung 114 der Bohrung 112 angeordnet ist, sondern auch das Ende dieses laschenförmigen Anschlußelementes 8A fest auf dem anodischen Anschlußelement 9A aufliegt. Mit Hilfe der Schraube 11, welche in die Bohrung 112 eingeschraubt wird, wird das kathodische Anschlußelement 8A so fest wie möglich gegen das anodische Anschlußelement 9A gepreßt.

## Patentansprüche

1. Speicherzellenverbindung für wenigstens zwei Speicherzellen (1, 100) auf der Basis von Alkalimetall und Chalkogen mit wenigstens einem Anodenraum (5) und einem Kathodenraum (4), die durch einen alkaliionenleitenden Festelektrolyten (3) voneinander getrennt und wenigstens bereichsweise von einem metallischen Gehäuse (2) begrenzt sowie mit wenigstens einem ersten und einem zweiten Anschlußelement (8A, 9A) je Speicherzelle (1, 100) versehen sind, wobei auf einer Stirnseite jeder Speicherzelle (1, 100) ein anodisches Anschlußelement (9A) der ersten Speicherzelle (1, 100) mit dem kathodischen Anschlußelement (8a) der zweiten Speicherzelle (1, 100) verbunden ist, dadurch gekennzeichnet, daß auf der gleichen Stirnfläche des Gehäuses (2) wenigstens ein Befestigungselement (11) vorgesehen ist, mittels dessen das erste Anschlußelement (8A) der ersten Speicherzelle (1) mit dem zweiten Anschlußelement (9A) der zweiten Speicherzelle (100) elektrisch leitend verbindbar ist, daß das Befestigungselement (11) als zylinderförmiger Stab ausgebildet ist, der über die Stirnfläche der Speicherzelle (1, 100) nach außen übersteht und mit einem Außengewinde versehen ist, auf das eine Haltemutter (12) aufgeschraubt ist, daß die beiden Anschlußelemente (8A, 9A) stab- oder laschenförmig ausgebildet und an ihren freien Enden mit jeweils einer für das Durchstecken des Befestigungselementes (11) vorgesehenen Durchbrechung (10) versehen sind, deren Querschnitt an den Querschnitt des Befestigungselements (11) angepaßt ist, und daß das zweite Anschlußelement (9A) der ersten Speicherzelle (1) ebenfalls für die lösbare Verbindung mit den Befestigungselement (11) einer dritten Speicherzelle (100) ausgebildet ist.

2. Speicherzellenverbindung für wenigstens zwei Speicherzellen (1, 100) auf der Basis von Alkalimetall und Chalkogen mit wenigstens einem Anodenraum (5) und einem Kathodenraum (4), die durch einen alkaliionenleitenden Festelektrolyten (3) voneinander getrennt und wenigstens bereichsweise von einem metallischen Gehäuse (2) begrenzt sowie mit wenigstens einem anodischen und einem kathodischen Anschlußelement (8A, 9A) je Speicherzelle (1, 100) versehen sind, wobei auf einer Stirnseite jeder Speicherzelle (1, 100) ein anodisches Anschlußelement (9A) der ersten Speicherzelle (1, 100) mit dem kathodischen Anschlußelement (8A) der zweiten Speicherzelle (1, 100) verbunden ist, dadurch gekennzeichnet, daß auf der gleichen Stirnfläche des Gehäuses (2) wenigstens ein durch eine Schraube gebildetes Befestigungselement (11) vorgesehen ist, daß die Schraube in eine Bohrung (112) in der Stirnfläche der Speicherzelle (1, 100) geschraubt ist, daß die Öffnung (114) der Bohrung (112) durch eine auf die Stirnfläche aufgelegte, das anodische Anschlußelement (9A) bildende Ringscheibe begrenzt ist, daß das anodische Anschlußelement (9A) über einen metallischen Leiter (113) mit dem Anodenraum (5) und der Begrenzungswand der Bohrung (112) elektrisch leitend verbunden ist, und daß das kathodische Anschlußelement (8A) laschenförmig ausgebildet und im Bereich des freien Endes mit einer Durchbrechung (10) für die lösbare Verbindung mit dem anodischen Anschlußelement (9A) und dem Befestigungselement (11) einer dritten Speicherzelle (100) ausgebildet ist.

3. Speicherzellenverbindung nach Anspruch 1 oder 2, dadurch gekennzeichnet, daß die Anschlußelemente (8A, 9A) einer jeden Speicherzelle (1, 100) aus einem speziell behandelten Aluminium oder Kupfer oder aus einer Aluminium- oder Kupferlegierung gefertigt und wenigstens bereichsweise mit einer korrossionsbeständigen Schicht versehen sind.

4. Speicherzellenverbindung nach einem der Ansprüche 1 oder 2, dadurch gekennzeichnet, daß die Anschlußelemente (8A, 9A) aus einer Kupfer-Zirkonium-, einer Kupfer-Chrom- oder einer Kupfer- Chrom- Zirkonium-Legierung oder aus dispersionsgehärtetem Kupfer gefertigt und wenigstens parziell mit einer Beschichtung aus Gold, Silber, Rhodium, Chrom oder Nickel überzogen sind.

5. Speicherzellenverbindung nach einem der Ansprüche 1 oder 2, dadurch gekennzeichnet, daß die Anschlußelemente (8A, 9A) aus einer Aluminium-Kupfer-Mangan- oder einer Aluminium-Mangan-Legierung oder einem dispersionsgehärtetem Aluminium gefertigt und wenigstens bereichsweise mit einer Beschichtung aus Gold, Rhodium, Silber, Nickel oder Chrom überzogen sind.

6. Speicherzellenverbindung nach einem der Ansprüche 1 oder 2, dadurch gekennzeichnet, daß die Anschlußelemente (8A, 9A) auf der Stirnfläche der Speicherzelle (1, 100) so angeordnet sind, daß sie auf einer durch den Mittelpunkt der Stirnfläche laufenden Geraden liegen.

7. Speicherzellenverbindung nach einem der Ansprüche 1 oder 2, dadurch gekennzeichnet, daß das Befestigungselement (11) auf der Stirnfläche der Speicherzelle (1, 100) so angeordnet ist, daß es in der Längsachse der Speicherzelle (1, 100) oder zwischen der Längsachse der Speicherzelle (1, 100) und dem Befestigungspunkt des kathodischen Anschlußelementes (8A) angeordnet ist.

## Claims

1. Storage cell connection for at least two storage cells (1, 100) on the basis of alkalimetal and chalkogen having at least one anode space (5) and one cathode space (4) which are separated from one another by an alkali-ion-conducting solid electrolyte (3) and are bounded at least area by area by a metallic housing (2) and are provided with at least one first and one second connecting element (8A, 9A) per storage cell (1, 100), an anodic connecting element (9A) of the first storage cell (1, 100) being connected to the cathodic connecting element (8A) of the second storage cell (1, 100) at one end face of each storage cell (1, 100), characterized in that on the same end face of the housing (2) at least one mounting element (11) is provided by means of which the first connecting element (8A) of the first storage cell (1) can be electrically conductively connected to the second connecting element (9A) of the second storage cell (100), that the mounting element (11) is constructed as a cylindrical rod which projects towards the outside past the end face of the storage cell (1, 100) and is provided with an outside thread on which a holding nut (12) is screwed, that the two connecting elements (8A, 9A) are constructed to be rod- or strap-shaped and are provided at their free ends with in each case one perforation (10) which is provided for the passing through of the mounting element (11) and the cross section of which matches the cross section of the mounting element (11), and that the second connecting element (9A) of the first storage cell (1) is also constructed for being detachably connected to the mounting element (11) of a third storage cell (100).

2. Storage cell connection for at least two storage cells (1, 100) on the basis of alkalimetal and chalkogen having at least one anode space (5) and one cathode space (4) which are separated from one another by an alkali-ion-conducting solid electrolyte (3) and are bounded at least area by area by a metallic housing (2) and are provided with at least one anodic and one cathodic connecting element (8A, 9A) per storage cell (1, 100), an anodic connecting element (9A) of the first storage cell (1, 100) being connected to the cathodic connecting element (8A) of the second storage cell (1, 100) on one end face of each storage cell (1, 100) characterized in that at least one mounting element (11) formed by a screw is provided on the same end face of the housing (2), that the screw is screwed into a hole (112) in the end face of the storage cell (1, 100), that the opening (114) of the hole (112) is bounded by an anular disc placed onto the end face and forming the anodic connecting element (9A), that the anodic connecting element (9A) is electrically conductively connected to the anode space (5) and the boundary wall of the hole (112) via a metallic conductor (113) and that the cathodic connecting element (8A) is constructed to be strap-shaped and formed in the area of the free end with a perforation (10) for being detachably connected to the anodic connecting element (9A) and the mounting element (11) of a third storage cell (100).

3. Storage cell connection according to Claim 1 or 2, characterized in that the connecting elements (8A, 9A) of each storage cell (1, 100) are manufactured of a specially treated aluminium or copper or of an aluminium or copper alloy and are provided at least area by area with a corrosion-resistant layer.

4. Storage cell connection according to one of Claims 1 or 2, characterized in that the connecting elements (8A, 9A) are manufactured of a copper-zirconium a copper-chromium or a copper-chromium-zirconium alloy or of dispersion-hardened copper and are coated at least partially with a coating of gold, silver, rhodium, chromium or nickel.

5. Storage cell connection according to one of Claims 1 or 2, characterized in that the connecting elements (8A, 9A) are manufactured of an aluminium-copper-manganese or an aluminium-manganese alloy or a dispersion-hardened aluminium and are coated at least area by area with a coating of gold, rhodium, silver, nickel or chromium.

6. Storage cell connection according to one of Claims 1 or 2, characterized in that the connecting elements (8A, 9A) are arranged on the end face of the storage cell (1, 100) in such a manner that they are located on a straight line extending through the centre of the end face.

7. Storage cell connection according to one of Claims 1 or 2, characterized in that the mounting element (11) is arranged on the end face of the storage cell (1, 100) in such a manner that it is arranged on the longitudinal axis of the storage cell (1, 100) or between the longitudinal axis of the storage cell (1, 100) and the mounting point of the cathodic connecting element (8A).

## Revendications

1. Liaison pour au moins deux cellules d'accumulateur (1, 100) à base de métal alcalin et de chalcogène, qui comportent au moins un volume anodique (5) et un volume cathodique (4), lesquels sont séparés l'un de l'autre par un électrolyte solide (3) conducteur d'ions alcalins et sont bordés, au moins par régions, par une enceinte métallique (2), et au moins un premier et un deuxième élément de raccordement (8A, 9A) pour chaque cellule d'accumulateur (1, 100), un élément de raccordement anodique (9A) de la première cellule d'accumulateur (1, 100) étant relié à l'élément de raccordement cathodique (8a) de la deuxième cellule d'accumulateur (1, 100), cela sur un côté frontal de chaque cellule d'accumulateur, caractérisée par le fait qu'il est prévu, sur le même côté frontal de l'enceinte (2), au moins un élément de fixation (11) au moyen duquel le premier élément de raccordement (8A) de la première cellule d'accumulateur (1) peut être relié électriquement au deuxième élément de raccordement (9A) de la deuxième cellule d'accumulateur (100), par le fait que l'élément de fixation (11) est réalisé en tant que barre cylindrique débordant à l'extérieur, au-delà de la surface frontale de la cellule d'accumulateur, et munie d'un filetage mâle sur lequel est vissé un écrou de retenue (12), par le fait que les deux éléments de raccordement (8A, 9A) sont réalisés en forme de barre ou de patte et, en leurs extrémités libres, sont munis chacun d'un ajour (10) qui est prévu pour le passage de l'élément de fixation (11) et dont la section droite est adaptée à la section droite de l'élément de fixation (11), et par le fait que le deuxième élément de raccordement (9A) de la première cellule d'accumulateur est également conçu et réalisé en vue de la liaison amovible à l'élément de fixation (11) d'une troisième cellule d'accumulateur (100).

2. Liaison pour au moins deux cellules d'accumulateur (1, 100) à base de métal alcalin et de chalcogène, qui comportent au moins un volume anodique (5) et un volume cathodique (4), lesquels sont séparés l'un de l'autre par un électrolyte solide (3) conducteur d'ions alcalins et sont bordés, au moins par régions, par une enceinte métallique (2), chaque cellule d'accumulateur (1, 100) étant munie d'au moins un élément de raccordement anodique et un élément de raccordement cathodique (8A, 9A), un élément de raccordement anodique (9A) de la première cellule d'accumulateur (1, 100) étant relié à l'élément de raccordement cathodique (8A) de la deuxième cellule d'accumulateur (1, 100), cela sur un côté frontal de chaque cellule, caractérisée par le fait qu'il est prévu, sur le même côté frontal de l'enceinte (2), au moins un élément de fixation (11) constitué par une vis, par le fait que la vis est vissée dans un trou (112) dans la surface frontale de la cellule d'accumulateur (1, 100), par le fait que l'ouverture (114) du trou (112) est bordée par un disque annulaire formant l'élément de raccordement anodique (9A), appliqué sur la surface frontale, par le fait que l'élément de raccordement anodique (9A) est électriquement relié, par un conducteur métallique (113), au volume anodique (5) et à la paroi de délimitation du trou (112), et par le fait que l'élément de raccordement cathodique (8A) est réalisé en forme de patte et comporte, dans la région de son extrémité libre, un ajour (10) aux fins de liaison amovible à l'élément de raccordement anodique (9A) et à l'élérnent de fixation (11) d'une troisième cellule d'accumulateur (100).

3. Liaison de cellules d'accumulateur selon revendication 1 ou 2, caractérisée par le fait que les éléments de raccordement (8A, 9A) de chaque cellule d'accumulateur (1, 100) sont faits en cuivre ou aluminium traité spécialement ou en un alliage d'aluminium ou de cuivre, et sont pourvus, au moins par régions, d'une couche résistant à la corrosion.

4. Liaison de cellules d'accumulateur selon l'une des revendications 1 ou 2, caractérisée par le fait que les éléments de raccordement (8A, 9A) sont faits en un alliage cuivre-zirconium, cuivre-chrome ou cuivre-chrome-zirconium, ou en cuivre durci par précipitation, et sont au moins partiellement recouverts d'un revêtement en or, argent, rhodium, chrome ou nickel.

5. Liaison de cellules d'accumulateur selon l'une des revendications 1 ou 2, caractérisée par le fait que les éléments de raccordement (8A, 9A) sont faits en un alliage aluminium-cuivre-manganèse, ou aluminium-manganèse, ou en aluminium durci par précipitation, et sont recouverts, au moins par régions, d'un revêtement d'or, rhodium, argent, nickel ou chrome.

6. Liaison de cellules d'accumulateur selon l'une des revendications 1 ou 2, caractérisée par le fait que les éléments de raccordement (8A, 9A) sont agencés sur la surface frontale de la cellule d'accumulateur (1, 100) de manière à se trouver sur une droite passant par le centre de la surface frontale.

7. Liaison de cellules d'accumulateur selon l'une des revendications 1 ou 2, caractérisée par le fait que l'élément de fixation (11) est agencé sur la surface frontale de la cellule d'accumulateur (1, 100) de manière à être situé sur l'axe longitudinal de la cellule d'accumulateur (1, 100) ou entre l'axe longitudinal de la cellule d'accumulateur (1, 100) et le point de fixation de l'élément de raccordement cathodique (8A).

# Fig.1

# Fig.2

# Fig.3

# Fig.4

# Fig.5

# Fig.6

# Fig.7

# Fig.8

# Fig.9